# EUROPEAN PATENT APPLICATION

(11) **EP 1 253 748 A2**
(43) Date of publication of application: **30.10.2002**
(21) Application number: 02008415.8
(22) Date of filing: 12.04.2002
(51) Int. Cl.: H04L 12/24

(54) **Automated network configuration of connected devices**

(30) Priority: 25.04.2001 US 286592 P; 08.01.2002 US 41363
(71) Applicant: Gateway, Inc., Poway, California 92064 (US)
(72) Inventor: Nguyen, Brian G., Garden Grove, CA 92843 (US)
(74) Representative: Viering, Jentschura & Partner

(57) **Abstract**

The present invention is directed to a method and a system of automatically configuring a network, a device connected to the network, and an information handling system connected to the device through the network so that the device is able to access shared data on the information handling system. For example, a device such as a music player is able to access shared music files stored on the information handling system through the network, and then play such files on speakers or a stereo system attached to the music player. The configuration method may be implemented as a set of instructions or software executed by the information handling system, which provides a graphical user interface such as a setup wizard. Portions of the configuration method may also be implemented as software or firmware executed by the music player, which operates in a non-interactive format such as a hidden daemon.

## Description

### RELATED APPLICATIONS

The present application claims the benefit under 35 U.S.C. § 119(e) of U.S. Provisional Application Serial No. 60/286,592 filed April 25, 2001.

### FIELD OF THE INVENTION

The present invention generally relates to the field of networks, and more specifically to a method and a system of automatically configuring the network, a device connected to the network, and an information handling system connected to the device through the network.

### BACKGROUND OF THE INVENTION

A network, such as a home network or a local area network (LAN), generally includes one or more information handling systems, such as a typical desktop computer, mobile computer, Internet appliance, and the like. The network may also include "thin" devices, such as a music player (e.g., Gateway™ Connected Music Player) or a video player. Thin devices usually do not have internal storage like that of a typical computer, and thus, will rely on the network to access data (such as music, video, and the like) from the computers on the network. However, setting up such a network is overly complicated for most users, especially ordinary users of a home network, considering the plethora of possible operating system and network configuration combinations. The normal setup process requires the user to read the user guide and manually configure the network, the device(s), and the computer(s). Such a setup process is overly complicated, and thus, limits consumer desire to purchase and utilize such thin devices.

### SUMMARY OF THE INVENTION

Accordingly, the present invention is directed to a method and a system for automated configuration of connected devices. The invention provides, for instance, a method and a system of automatically configuring a network, a device connected to the network, and an information handling system connected to the device through the network so that the device is able to access shared data on the information handling system. For example, a device such as a music player is able to access shared music files stored on the information handling system through the network, and then play such files on speakers or a stereo system attached to the music player.

In one aspect of the present invention, a music system includes an information handling system communicatively coupled to a network and a music player communicatively coupled to and capable of accessing shared data on the information handling system through the network. A method for configuring the music system includes the steps of: configuring the music player for accessing the information handling system through the network, automatically detecting the music player by the information handling system through the network, automatically searching for one or more music folders on the information handling system, and specifying at least one of the music folders on the information handling system as shared data accessible by the music player through the network.

In another aspect of the present invention, the configuration method may be implemented as a set of instructions or software executed by the information handling system, which provides a graphical user interface, such as a setup wizard or the like. In yet another aspect of the present invention, portions or steps of the configuration method may also be implemented as software or firmware executed by the music player, which operates in a non-interactive format, such as a hidden daemon or the like. The software or firmware on the music player may operate in conjunction with the instructions or software executed by the information handling system.

It is to be understood that both the foregoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:

FIG. 1A illustrates an information handling system connected to a device through a network in accordance with an exemplary embodiment of the present invention;

FIGS. 1B-21 illustrate screens of a graphical user interface for automatically configuring a network, a device connected to the network, and an information handling system connected to the device through the network in accordance with an exemplary embodiment of the present invention; and

FIGS. 22A and 22B are flow diagrams depicting a method for automatically configuring the network, the device connected to the network, and the information handling system connected to the device through the network shown in FIG. 1A in accordance with an exemplary embodiment of the present invention.

### DETAILED DESCRIPTION OF THE INVENTION

Reference will now be made in detail to the presently preferred embodiments of the invention, examples of which are illustrated in the accompanying drawings.

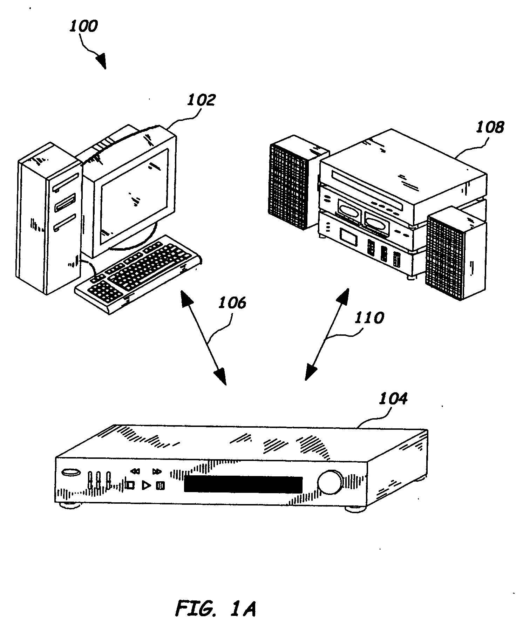

Referring generally to FIGS. 1A through 22B, exemplary embodiments of the present invention are shown. An information handling system (such as a personal computer, convergence system, information appliance, and the like) may be connected to a "thin" device (such as a music player, video player, or the like) through a network (such as a home network, local area network (LAN), or the like). The device generally does not have internal storage like that of a typical computer, and thus, accesses data (such as music, video, and the like) on the information handling system through the network. Embodiments of the present invention are directed to a method and a system for automatically configuring the network, the device, and the information handling system so that the device is able to access such data on the information handling system. For example, the music player is able to access music files stored on the information handling system through the network, and then play such files on speakers or a stereo system attached to the music player.

Referring now to FIG. 1A, an exemplary embodiment 100 of the present invention is shown wherein an information handling system 102 is connected to a device 104 through a network 106. The information handling system 102 may be a typical desktop computer, mobile computer, personal digital assistant, convergence system, digital information appliance, Internet appliance, or the like, and the device 104 may be a music player, video player, or the like as contemplated by a person of ordinary skill in the art. The information handling system 102 is connected to the device 104 through the network 106, which may be a home network, a local area network (LAN), wireless network, or the like. Although one information handling system 102 and one device 104 are shown in FIG. 1A, those skilled in the art will appreciate that any number of information handling systems and devices may be included in the network 106 without departing from the spirit and scope of the present invention.

In the illustrated embodiment, the device 104 is a music player 104, such as the Gateway™ Connected Music Player, and is connected to the information handling system 102 through a home network 106. Music files are stored on the information handling system 102, such as MP3 files and the like. The music player 104 may be attached either to speakers directly or to a stereo system 108 through standard wired or wireless connections 110. Alternatively, the music player 104 may be attached to another information handling system. Using network protocols known in the art (such as Server Message Block (SMB) protocol and the like), the music player 104 accesses the music files on the information handling system 102 through the network 106, and plays the files on the attached speakers or stereo system 108. In this way, the music playing system 100 as shown in the embodiment may provide interconnectivity among these various components, such as the information handling system 102, stereo system 108, and music player 104 in order to share music and other files that were previously difficult to transfer, were configured in various formats, and lacked the pervasiveness offered by the present system 100.

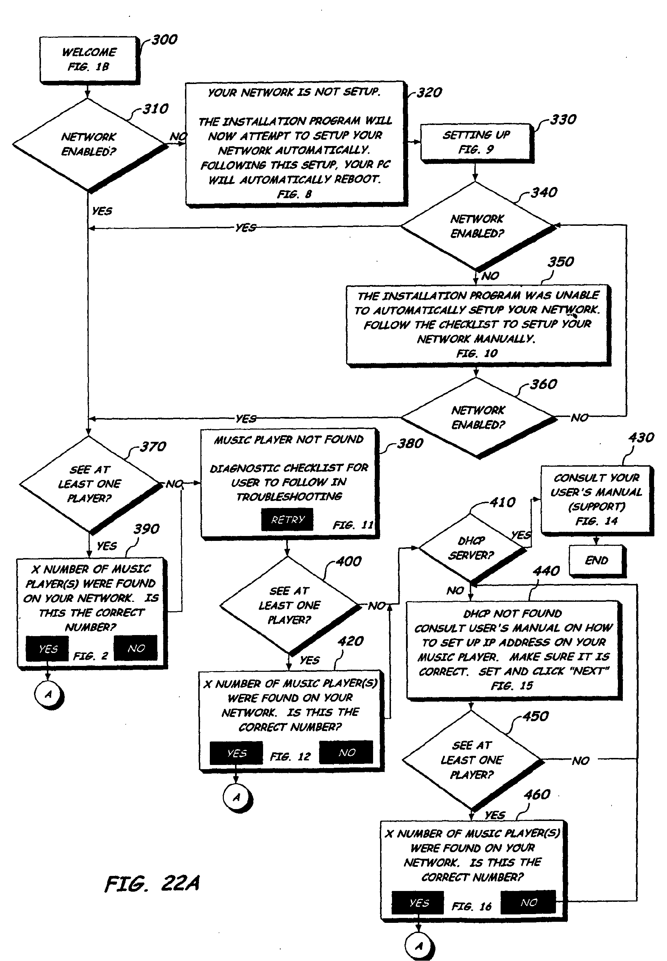

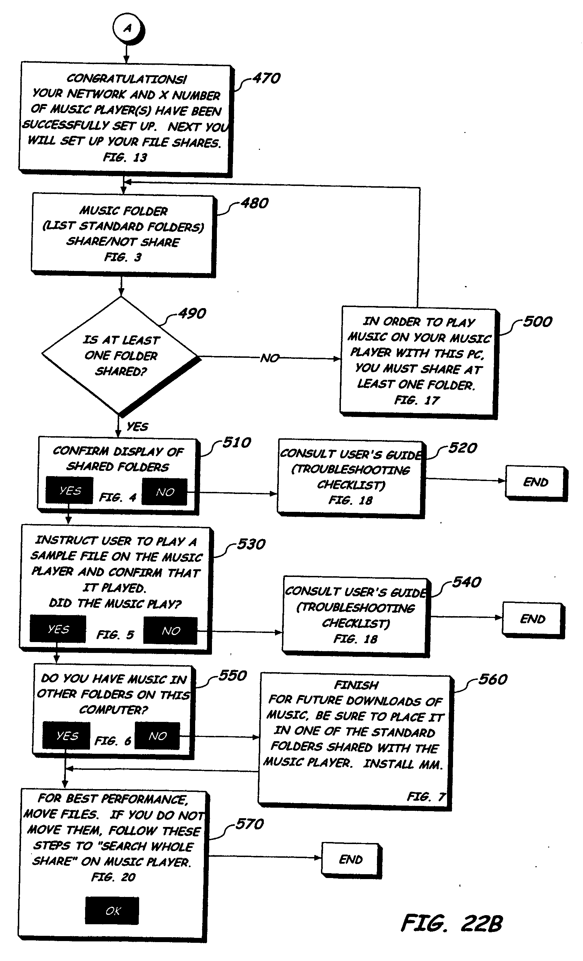

Referring generally now to FIGS. 1A-22B, FIGS. 1B through 21 illustrate exemplary screens of a graphical user interface of the present invention, and FIGS. 22A & 22B illustrate a flow diagram depicting a method for automatically configuring the network 106, the device 104 connected to the network 106, and the information handling system 102 connected to the device 104 through the network 106 shown in FIG. 1A. In an exemplary embodiment of the present invention, the configuration method is implemented as a set of instructions or software executed by the information handling system 102. Portions or steps of the configuration method may also be implemented as software or firmware running on the device 104, which operates in conjunction with the instructions or software executed by the information handling system 102. The set of instructions or software on the information handling system 102 and/or the device 104 may configure the information handling system 102 and the device 104 to enable the exchange of data using known network protocols pre-built into an operating system installed on the information handling system 102 (such as the SMB protocol and the like).

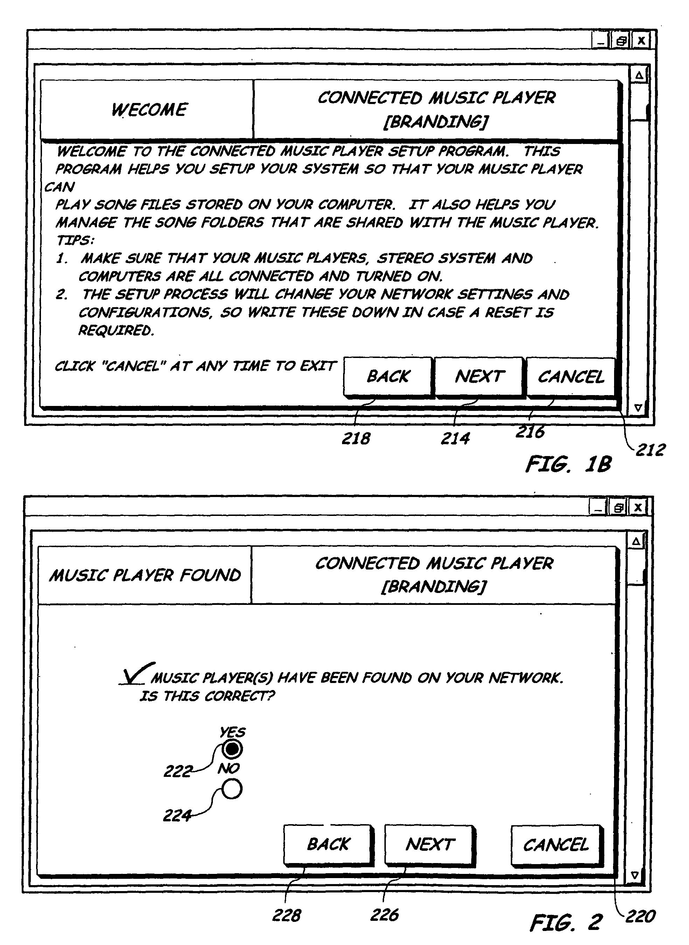

The set of instructions or software executed by the information handling system 102 is preferably implemented in a wizard format, which guides the user through a single path in a flowchart of possible situations, as shown in FIGS. 22A & 22B. The figures denoted in FIGS. 22A & 22B refer to the screens of the graphical user interface shown in FIGS. 1B-21, which may be displayed to a user by the configuration instructions or software executed by the information handling system 102.

In order to setup the network 106, the device 104 (i.e., the music player), and the information handling system 102 to utilize the device 104 (i.e., to access the music files on the information handling system 102 through the network 106, and play the music files on the attached speakers or stereo system 108), the configuration instructions or software executed by the information handling system 102 may perform the following tasks: install and/or configure the information handling system 102 for communications with the network 106, install and/or configure a TCP/IP stack on the information handling system 102, install and/or enable file sharing on the information handling system 102, detect a DHCP server on the network 106 for assignment of IP addresses to the information handling system 102 and the device 104 (i.e., the music player), detect the music player 104, search for and enable file sharing of music folders on the information handling system 102, and insert a sample music file on the information handling system 102 to verify the success of the entire configuration process.

In addition, on secured operating systems such as Windows NT, Windows 2000 and like secured operating systems, the configuration instructions or software executed by the information handling system 102 may also create a user account with appropriate access rights, grant permissions to each music folder on the information handling system 102, and grant permissions to each shared music folder on the information handling system 102. For example, it may be preferable to limit access rights depending on a user profile on the information handling system 102, so that a first user of the information handling system 102, such as a child, is unable to access certain content which may be accessible by a second user, such as a parent.

The configuration software or firmware on the music player 104 is preferably implemented in a non-interactive format, such as a hidden daemon or the like. This daemon on the music player 104 may accept commands from the wizard on the information handling system 102 via the network 106, and perform the appropriate configurations on the music player 104. Thus, the user is relieved of the burden of utilizing the often-unfriendly controls and small display on the music player 104. As part of the configuration process, the configuration software or firmware on the music player 104 may perform the following tasks: accept an IP address from the wizard on the information handling system 102 (for example, via User Datagram Protocol (UDP) or the like) and/or automatically configure its own IP address, restart a network search for music folders on the information handling system 102 after the wizard on the information handling system 102 shares the music folders, send diagnostic results to the information handling system 102, and configure other options on the music player 104 (e.g., volume and the like).

Referring now to FIGS. 1B through 21, features of the present invention will be discussed in relation to exemplary display screens of the present invention. A user interface may include a variety of features to provide interconnectivity among various components, such as the information handling system 102, stereo system 108, and music player 104. Therefore, it should be apparent to a person of ordinary skill in the art that the following examples may be rearranged, additional features added, and different routing methods employed without departing from the spirit and scope of the present invention.

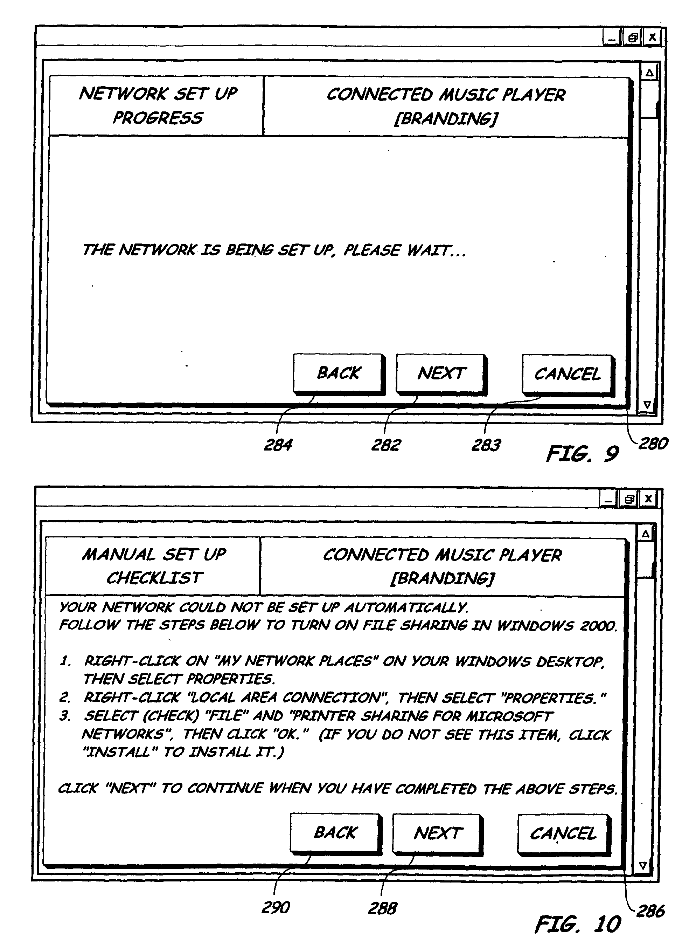

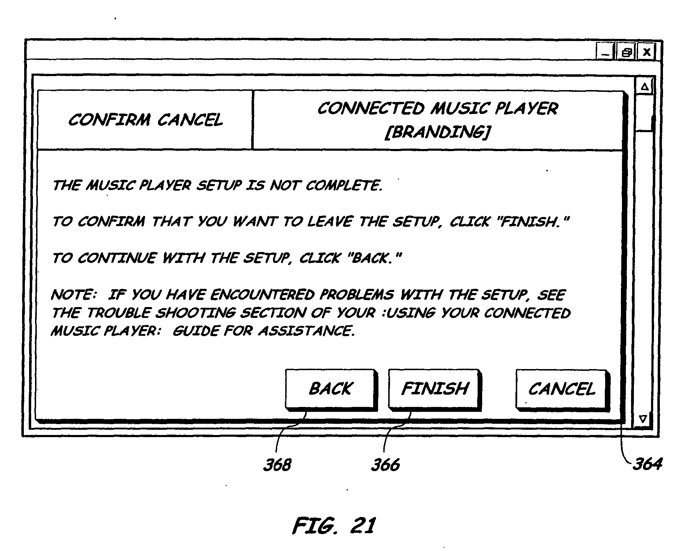

For example, FIG. 1B illustrates a welcome screen 212 that is displayed as a result of an information handling system executing configuration instructions or software stored on a removable medium. Preferably, after the configuration has completed, the configuration application may only be accessed again from the removable medium, in order to ensure the integrity of the configuration. On the welcome screen 212, selection of a "Next" button 214 may cause an application of the present invention to determine if a network is enabled. If the network is enabled, a "Music Player Found" screen, such as screen 220 shown in FIG. 2, may be displayed. Alternatively, if the network is not enabled, a "Network Not Set Up" screen, such as screen 274 shown in FIG. 8, may be displayed. On the welcome screen 212, selection of a "Cancel" button 216 may cause a "Confirm Cancel" screen, such as screen 364 shown in FIG. 21, to be displayed. Further, a "Back" button 218 may be disabled.

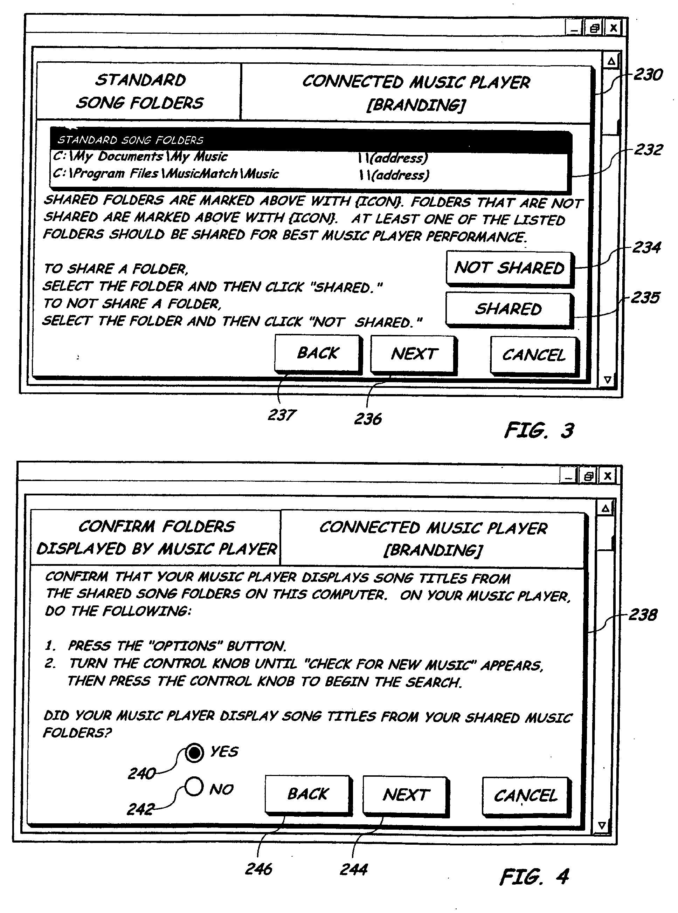

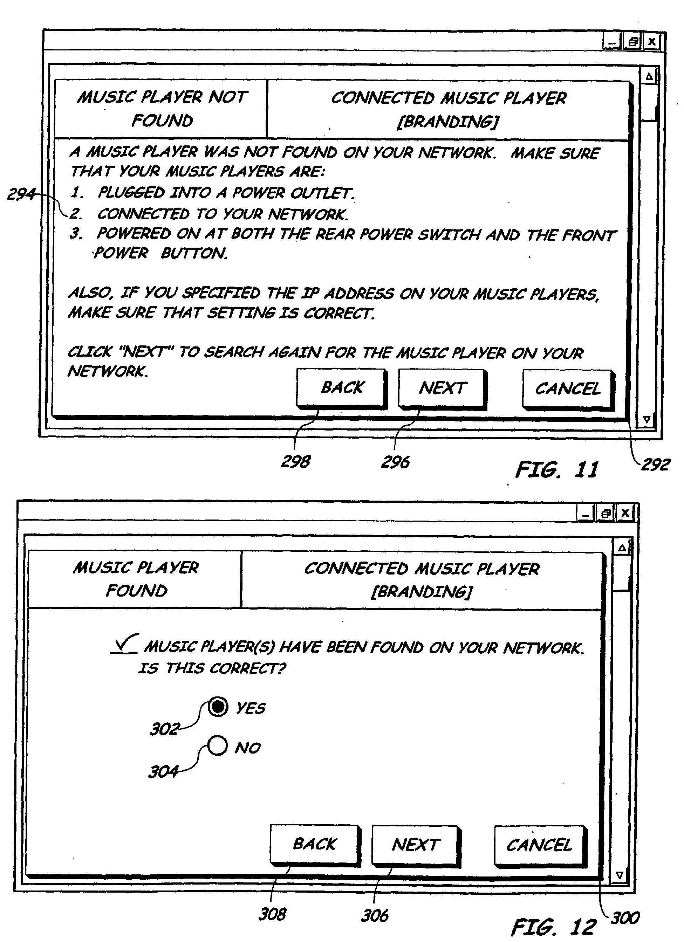

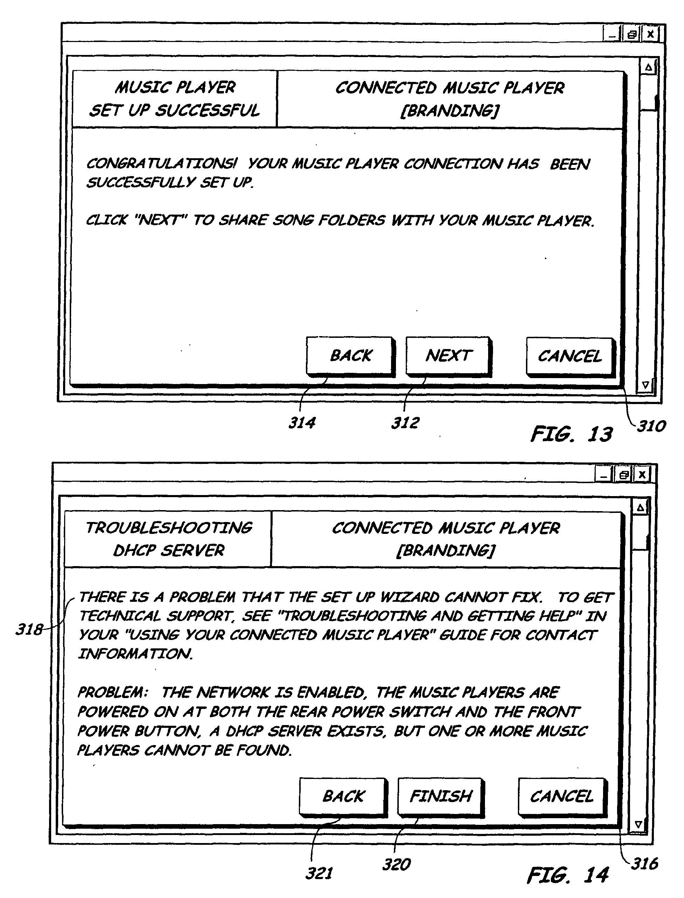

In FIG. 2, a "Music Player Found" screen is shown. This screen 220 may indicate whether one or more music players are detected on the network. Selection of a radio button labeled "Yes" 222 allows a user to indicate that the correct number of music players accessible over the network have been found. Alternatively, selection of a radio button labeled "No" 224 allows a user to indicate that the correct number of music players accessible over the network have not been found. Selection of a "Next" button 226 with the "Yes" radio button 222 selected may cause a "Standard Song Folders" screen, such as screen 230 shown in FIG. 3, or a "Music Player Set Up Successful" screen, such as screen 310 shown in FIG. 13, to be displayed. Alternatively, selection of the "Next" button 226 with the "No" radio button 224 selected may cause a "Music Player Not Found" screen, such as screen 292 shown in FIG. 11, to be displayed. Further, selection of a "Back" button 228 may cause a previous screen to be redisplayed, such as the "Welcome" screen 212 of FIG. 1B.

FIG. 3 illustrates a "Standard Song Folders" screen. Display of this screen 230 may cause the application of the present invention to search the information handling system for default song folders containing music files. Preferably, this search is performed automatically without user input or intervention. The results of the search may be displayed in a list box 232. For example, the search results may be displayed folder-by-folder as the search results are found, which may also indicate the progress of the search. Alternatively, all of the search results may be displayed only after the search has completed. The screen 230 may not accept user input until the search has completed. Additionally, if no default song folder is found as a result of the search, a default song folder may be created, such as "C:\My Documents\My Music". The list box 232 includes default song folders that the application has either found or created on the information handling system, and may include any number of song folders as desired by a person of ordinary skill in the art. Information about each song folder may include the following: either a "shared" or "not shared" icon next to the folder name, folder location, number of music files contained in the folder, disk space consumed by the music files in the folder, shared folder name, and the like.

Selecting a folder that is currently shared and then selecting a "Not Shared" button 234 may cause the selected folder to be marked as not shared. Likewise, selecting a folder that is currently not shared and then selecting a "Shared" button 235 may cause the selected folder to be marked as shared.

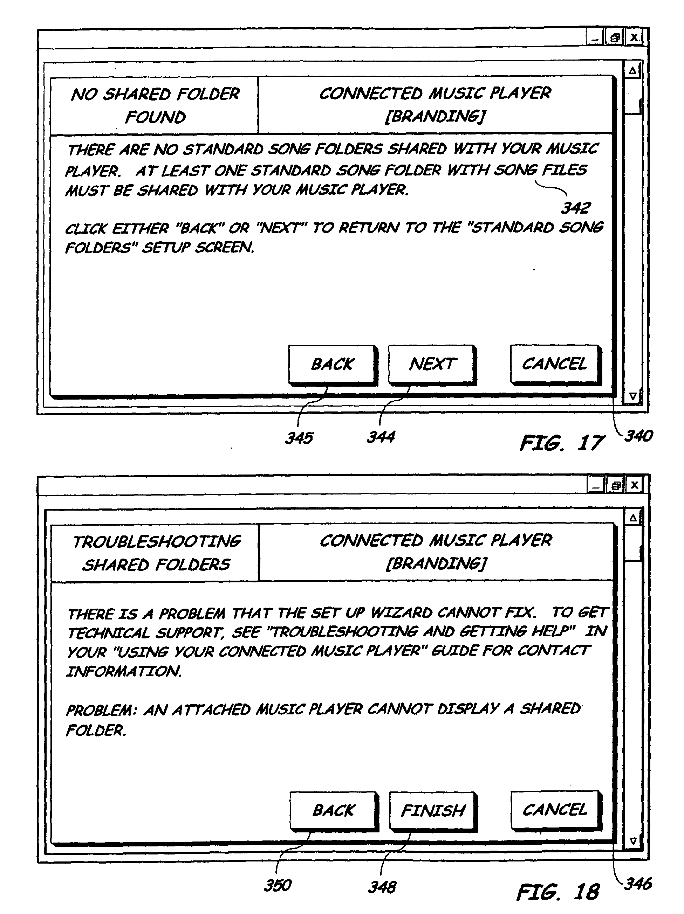

Selection of a "Next" button 236 may cause the application of the present invention to confirm that at least one folder has been shared. If at least one folder is shared, a "Confirm Folders Displayed by Music Player" screen, such as screen 238 shown in FIG. 4, may be displayed. Alternatively, if at least one folder is not shared, a "No Shared Folder Found" screen, such as screen 340 shown in FIG. 17, may be displayed. Further, selection of a "Back" button 237 may cause a previous screen to be redisplayed, such as the "Music Player Found" screen 220 of FIG. 2, the "Music Player Set Up Successful" screen 310 of FIG. 13, or the like.

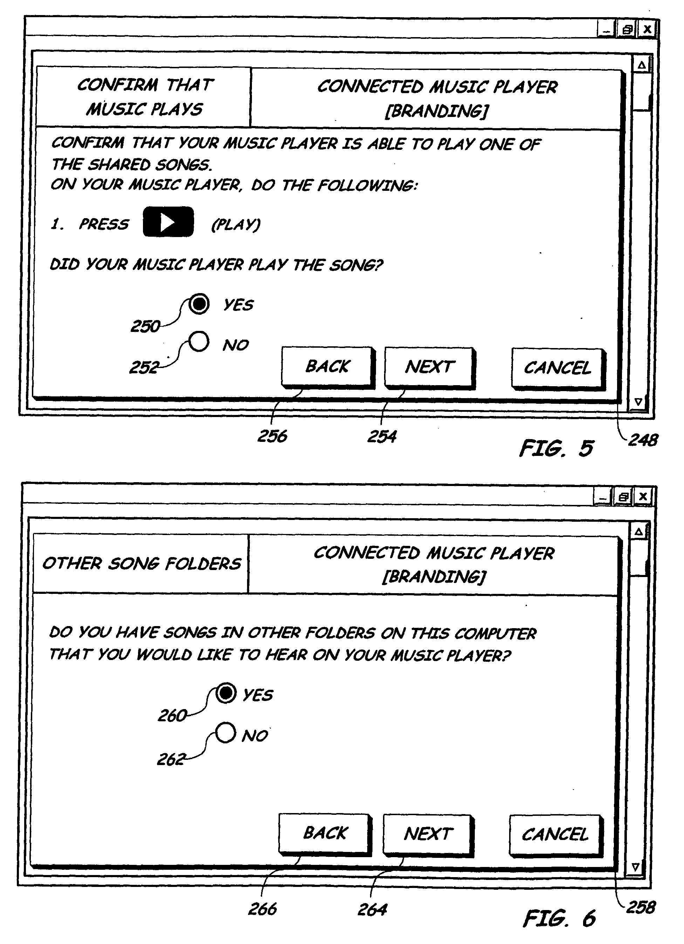

FIG. 4 shows a "Confirm Foiders Displayed by Music Player" screen. Selection of a radio button labeled "Yes" 240 may allow a user to indicate that song folders were found. Alternatively, selection of a radio button labeled "No" 242 may allow a user to indicate that song folders were not found. Additionally, selection of a "Next" button 244 with the "No" radio button 242 selected may cause a "Troubleshooting Shared Folders" screen, such as screen 346 shown in FIG. 18, to be displayed. Further, selection of the "Next" button 244 with the "Yes" radio button 240 selected may cause a "Confirm That Music Plays" screen, such as screen 248 shown in FIG. 5, to be displayed. Selection of a "Back" button 246 may cause a previous screen to be redisplayed, such as the "Standard Song folders" screen 230 of FIG. 3.

FIG. 5 illustrates a "Confirm That Music Plays" screen 248 of the present invention. This screen 248 enables a user to confirm that a music player is able to play one of the music files in the shared song folders. A radio button labeled "Yes" 250 allows the user to indicate that music played, while a radio button labeled "No" 252 allows the user to indicate that music did not play.

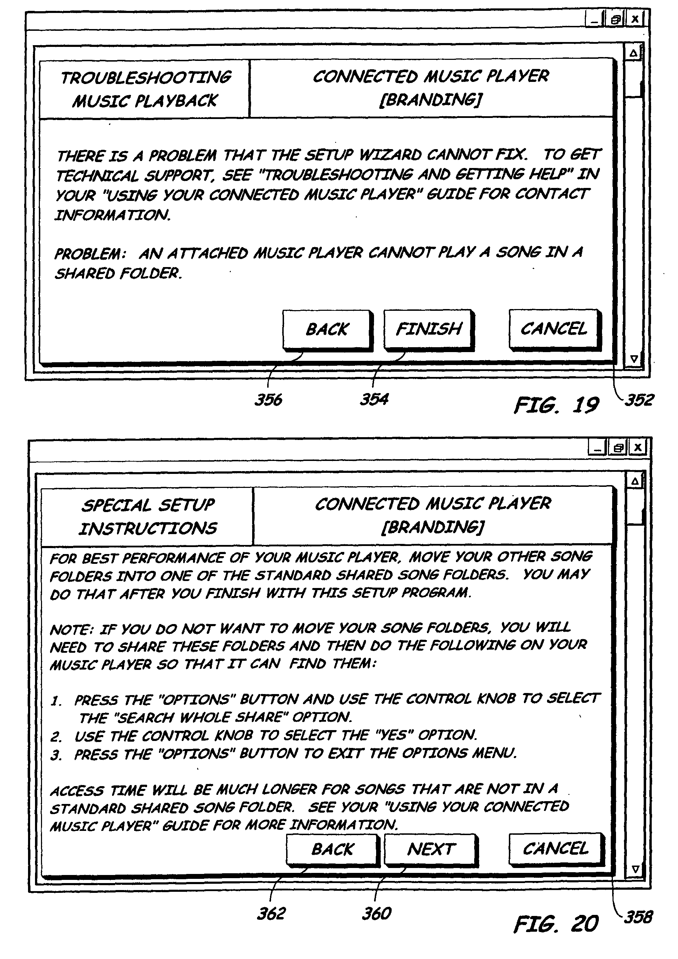

Selection of a "Next" button 254 with the "No" radio button 252 selected may cause a "Troubleshooting Music Playback" screen, such as screen 352 shown in FIG. 19, to be displayed. Alternatively, selection of the "Next" button 254 with the "Yes" radio button 250 selected may cause a "Other Song Folders" screen, such as screen 258 shown in FIG. 6, to be displayed. Selection of a "Back" button 256 may cause a previous screen to be redisplayed, such as the "Confirm Folders Displayed by Music Player" screen 238 of FIG. 4.

In FIG. 6, a depiction of an "Other Song Folders" screen 258 of the present invention is shown. A radio button labeled "Yes" 260 allows a user to indicate that there are music files in a song folder other than the default song folders. A radio button labeled "No" 262 allows the user to indicate that there are no other music files in song folders other than the default song folders.

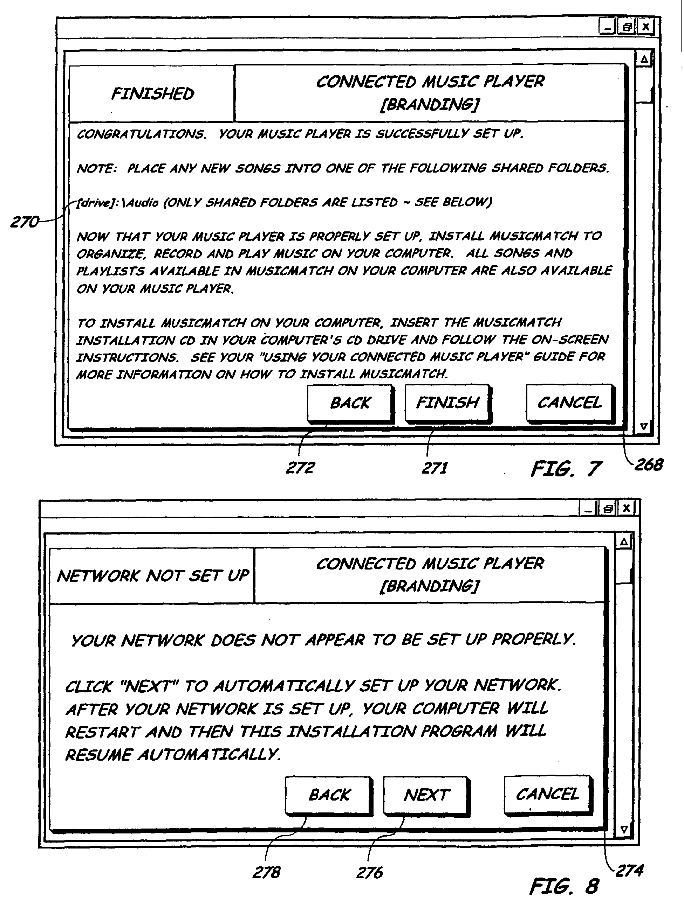

Selection of a "Next" button 264 with the "No" radio button 262 selected may cause a "Finished" screen, such as screen 268 shown in FIG. 7, to be displayed. Alternatively, selection of the "Next" button 264 with the "Yes" radio button 260 selected may cause a "Special Setup Instructions" screen, such as screen 358 shown in FIG. 20, to be displayed. Selection of a "Back" button 266 may cause a previous screen to be redisplayed, such as the "Confirm That Music Plays" screen 248 of FIG. 5.

FIG. 7 illustrates a "Finished" screen 268 of the present invention. A list 270 indicates the song folders on the information handling system which are shared and thus accessible by the music player or other device over the network. This list 270 may include the default song folders which have been found or created, and then marked as shared, during the configuration process. This list 270 may further include other song folders which have been input by the user as containing music files, and then also marked as shared, during the configuration process. Selection of a "Finish" button 271 may complete the configuration process. Selection of a "Back" button 272 may cause a previous screen to be redisplayed, such as the "Other Song Folders" screen 258 of FIG. 6.

In FIG. 8, a "Network Not Set Up" screen 274 of the present invention is shown. This screen may be displayed if the user's network is not set up, for example, if TCP/IP or networking is not configured, or file sharing is not enabled, on the information handling system. Actions may then be taken and/or suggested by to successfully set up the network. For example, selection of a "Next" button 276 may initiate an automatic network setup process and then cause a "Network Setup Progress" screen, such as screen 280 shown in FIG. 9, to be displayed. Selection of a "Back" button 278 may cause a previous screen to be redisplayed, such as the "Welcome" screen 212 of FIG. 1B.

FIG. 9 shows a "Network Setup Progress" screen 280 of the present invention. While this screen 280 is displayed, there is typically no user interaction possible, other than selection of a "Back" button 284, "Cancel" button 283, or the like. This screen 280 is displayed while the application attempts to set up the network. after the computer restarts, with the "Music Player Found" screen of FIG. 2 or the "Manual Setup Checklist screen 186 of FIG. 10. If the network is successfully set up, the information handling system restarts, and then the "Music Player Found" screen 220 of FIG. 2 is displayed. Alternatively, if it is not possible to automatically set up the network, a "Manual Setup Checklist" screen, such as screen 286 shown in FIG. 10, is displayed. In this instance, a "Next" button 282 may be disabled. Selection of the "Back" button 284 may cause a previous screen to be redisplayed, such as the "Network Not Set Up" screen 274 of FIG. 8.

In FIG. 10, a "Manual Setup Checklist" screen 286 of the present invention is shown. This screen 286 may be displayed if the application fails to automatically set up the network, and may provide instructions for guiding the user through a manual setup of the network. Once the manual setup is completed, the user may select a "Next" button 288 to cause the application to check again if the network is set up. If the network is set up, the application may then search for at least one attached music player, and if at least one music player is found, then the "Music Player Found" screen 220 of FIG. 2 is displayed. Alternatively, if the network is set up and at least one music player is not found, the "Music Player Not Found" screen 292 of FIG. 11 is displayed. Selection of a "Back" button 290 may cause a previous screen to be redisplayed, such as the "Network Not Set Up" screen 274 of FIG. 8.

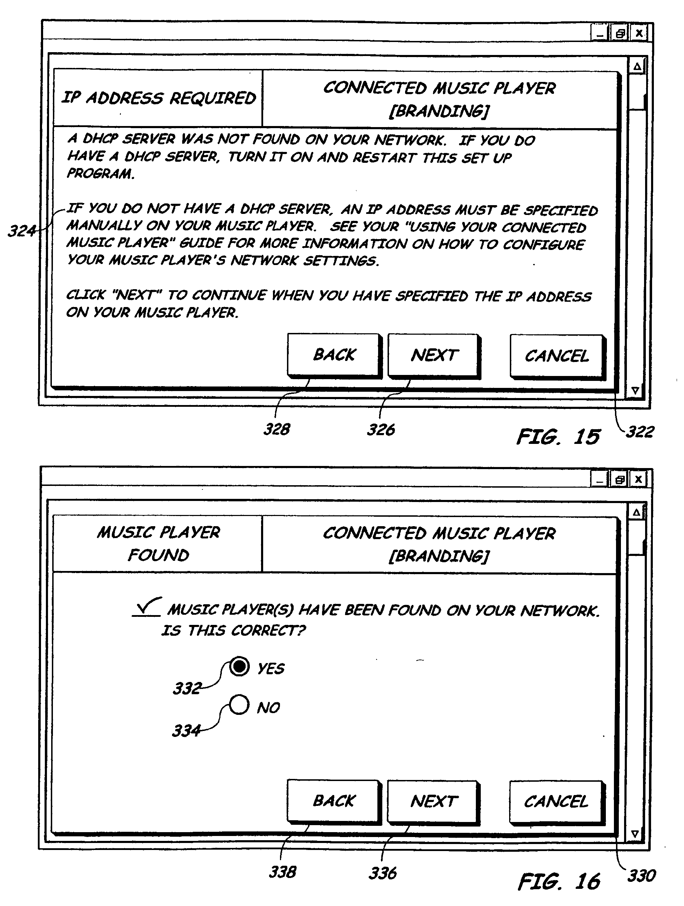

FIG. 11 illustrates a "Music Player Not Found" screen 292 of the present invention. This screen 292 may be displayed if no music players are found on the network, the user indicates that not enough music players were found on the network, and the like. The screen 292 may provide instructions 294 to guide the user in troubleshooting the failure of the application to locate the music player. By selecting a "Next" button 296, the application will again search again for a music player. If one or more music players are found, a "Music Player Found" screen, such as screen 300 shown in FIG. 12, may be displayed. Alternatively, if no music player is found, then the application may check whether a DHCP server exists. If a DHCP server exists, a "Troubleshooting DHCP Server" screen, such as screen 316 shown in FIG. 14, is displayed. If a DHCP server does not exist, an "IP Address Required" screen, such as screen 322 shown in FIG. 15, is displayed. Selection of a "Back" button 298 may cause a previous screen to be redisplayed, such as the "Music Player Found" screen 220 of FIG. 2, the "Manual Set Up Checklist" screen 286 of FIG. 10, and the like.

In FIG. 12, a "Music Player Found" screen 300 of the present invention is shown. This screen 300 is displayed if one or more music players are detected on the network, and may be utilized as a second instance of the screen 220 shown in FIG. 2. A radio button labeled "Yes" 302 allows the user to indicate that the correct number of music players has been found. A radio button labeled "No" 304 allows the user to indicate that the correct number of music players has not been found. Selection of a "Next" button 306 with the "Yes" radio button 302 selected may cause a "Music Player Setup Successful" screen, such as screen 310 shown in FIG. 13, to be displayed. Alternatively, selection of the "Next" button 306 with the "No" radio button 304 selected may cause the application to check to whether a DHCP server exists. If a DHCP server exists, the "Troubleshooting DHCP Server" screen 316 of FIG. 14 is displayed. If a DHCP server does not exist, the "IP Address Required" screen 322 of FIG. 15 is displayed. Selection of a "Back" button 308 may cause a previous screen to be redisplayed, such as the "Music Player Not Found" screen of FIG. 11.

FIG. 13 shows a "Music Player Set Up Successful" screen 310 of the present invention. This screen 310 may be displayed after the application has confirmed that the network has been set up and the correct number of music players have been found. Selection of a "Next" button 312 may cause the "Standard Song Folders" screen 230 of FIG. 3 to be displayed. Selection of a "Back" button 314 may cause a previous screen to be redisplayed, such as the "Music Player Found" screen 220 of FIG. 2, the "Music Player Found" screen 300 of FIG. 12, or the like.

In FIG. 14, a "Troubleshooting DHCP Server" screen 316 of the present invention is shown. This screen 316 is displayed if the network is properly set up, the user has verified that the music player(s) is properly powered on, and the application finds a DHCP server, but the application is still not able to find the music player(s) on the network. The screen 316 may provide instructions 318 to consult a user's manual for more information on troubleshooting the problem. Selecting a "Finish" button 320 may cause the user intefface to close and the application to terminate. Selecting a "Back" button 321 may cause a previous screen to be redisplayed, such as "Music Player Not Found" screen 292 of FIG. 11, the "Music Player Found" screen 300 of FIG. 12, or the like.

FIG. 15 illustrates an "IP Address Required" screen 322. This screen 322 is displayed if the application fails to find a DHCP server. The screen 322 may provide instructions 324 to consult a user manual for information about setting an IP address on the music player. Alternatively, a wizard may be provided to supply suggestions. Selecting a "Next" button 326 may cause the application to look for attached music players. If at least one music player is found, a "Music Player Found" screen, such as screen 330 shown FIG. 16, is displayed. If no music player is found, then the "IP Address Required" screen of FIG. 15 is redisplayed. Selecting a "Back" button 328 may cause a previous screen to be redisplayed, such as the "Music Player Found" screen 300 of FIG. 12, the "Music Player Not Found" screen 292 of FIG. 11, or the like.

In FIG. 16, a "Music Player Found" screen 330 of the present invention is shown. A radio button labeled "Yes" 332 allows the user to indicate that the correct number of music players have been found. A radio button labeled "No" 334 allows the user to indicate that the correct number of music players have not been found. Selecting a "Next" button 336 with the "Yes" radio button 332 selected may cause the "Music Player Setup Successful" screen 310 of FIG. 13 to be displayed. Selecting the "Next" button 336 with the "No" radio button 334 selected may cause the "IP Address Required" screen 322 of FIG. 15 to be redisplayed. Likewise, selecting a "Back" button 338 may cause the "IP Address Required" screen 322 of FIG. 15 to be redisplayed.

Regarding FIG. 17, a "No Shared Folder Found" screen 340 of the present invention is shown. This screen 340 may be displayed if the user has failed to share any song folders on the information handling system. Selecting a "Next" button 344 may cause the "Standard Song folders" screen 230 of FIG. 3 to be redisplayed. Likewise, selecting a "Back" button 345 may cause the "Standard Song Folders" screen 230 of FIG. 3 to be redisplayed.

In FIG. 18, a "Troubleshooting Shared Folders" screen 346 is displayed. This screen 346 is displayed if the user indicates that, having followed the set up instructions for the music player, no shared folders were found. Selecting a "Finish" button 348 may cause the user interface to close and the application to terminate. Selecting a "Back" button 350 may cause a previous screen to be redisplayed, such as the "Confirm Folders Found" screen 238 of FIG. 4.

FIG. 19 shows a "Troubleshooting Music Playback" screen 352 of the present invention. This screen 352 is displayed if the user indicates that, having followed the set up instructions for the music player, the music player will not play music files from the shared song folders on the information handling system. Again, selecting a "Finish" button 354 may cause the user interface to close and the application to terminate. Selecting a "Back" button 356 may cause a previous screen to be redisplayed, such as the "Confirm That Music Plays" screen 248 of FIG. 5.

In regards to FIG. 20, a "Special Setup Instructions" screen 358 is shown. This screen 358 includes suggestions for moving music files into a default song folder, or specifying non-default song folders as shared folders. Selecting a "Next" button 360 causes the "Finished" screen 268 of FIG. 7 to be displayed. Selecting a "Back" button 362 causes the "Other Music Folders" screen 258 of FIG. 6 to be displayed.

In FIG. 21, a "Confirm Cancel" screen 364 is displayed to confirm the selection of the "Cancel" button from any of the previous screens shown in FIGS. 1B through 20. Selecting a "Finish" button 366 causes the user interface to close and the application to terminate. Selecting a "Back" button 368 returns to the previous screen from which the "Cancel" button was selected.

Referring now to FIGS. 1A-22B, a method for automatically configuring the network 106, the device 104 (i.e., the music player 104), and the information handling system 102 will be described. The method may be implemented as a set of instructions or software for configuring the network 106, the device 104, and the information handling system 102 of the present invention. For instance, the set of instructions or software may reside on a removable medium, such as a CD-ROM, DVD, floppy disk and the like, that is accessed by the information handling system 102 to configure the information handling system 102, the device 104, and the network 106 for operation in accordance with the set of instructions or software.

For example, a removable medium may be inserted into the information handling system 102 (FIG. 1A). At step 300, the "Welcome" screen 212 shown in FIG. 1B is automatically displayed to the user on the information handling system 102 upon insertion of the removable medium. When the user selects the "Next" button 214 on the "Welcome" screen 212 in FIG. 1B, the configuration software on the information handling system 102 and/or the music player 104 automatically checks whether the network 106 is enabled in step 310. This step includes confirming that TCP/IP is configured and file sharing is enabled on the information handling system 102 .

If TCP/IP is not configured and/or file sharing is not enabled, the "Network Not Set Up" screen 274 shown in FIG. 8 is displayed to the user on the information handling system 102 in step 320. When the user selects the "Next" button 276 on this screen 274 of FIG. 8, the "Network Set Up Progress" screen 280 shown in FIG. 9 is displayed to the user on the information handling system 102 at step 330. If TCP/IP is not configured, the software configures the information handling system 102 to support communications with the network 106. Also, if file sharing is not enabled, the software enables file sharing on the information handling system 102. Then, in step 340, the software again checks whether the network 106 is enabled. If the network 106 is still not enabled, then the "Manual Set Up Checklist" screen 286 shown in FIG. 10 is displayed to the user on the information handling system 102 in step 350. After the user manually sets up the network 106, the user selects the "Next" button 288 on this screen 286 of FIG. 10, and in response, the software again checks whether the network 106 is enabled in step 360.

If the software confirms that the network 106 is enabled (in step 310, 340, or 360), the software then detects the existence of a DHCP server on the network 106 and verifies whether the music player 104 can be seen on the network 106 in step 370. The software scans the network 106 and identifies each device on the network 106 based on the MAC address of the device. For instance, if the MAC address begins with 00-04-32-xx-xx-xx, the device may be considered and identified as the music player 104.

If the software finds at least one music player 104 on the network 106, the "Music Player Found" screen 220 shown in FIG. 2 is displayed to the user on the information handling system 102 in step 390. In the event that multiple music players 104 are connected to the network 106, this screen 220 confirms that the correct number of music players 104 were found on the network 106. If the correct number of music players 104 were found on the network 106, the user selects the "Next" button 226 with the "Yes" radio button 222 selected on this screen 220 of FIG. 2. In response, the "Music Player Set Up Successful" of FIG. 13, and then the "Standard Song Folders" screen of FIG. 3, are displayed to the user on the information handling system 102 in steps 470 and 480. Alternatively, step 470 may be omitted, and the "Standard Song Folders" screen of FIG. 3 may be displayed to the user in step 480.

If the software does not find an accessible music player 104 on the network 106 in step 370, the "Music Player Not Found" screen 292 shown in FIG. 11 may be displayed to the user on the information handling system 102 in step 380. Additionally, if the incorrect number of music players 104 were found on the network 106 in step 390, the user selects the "Next" button 226 with the "No" radio button 224 selected on this screen 220 of FIG. 2, and in response, the "Music Player Not Found" screen 292 shown in FIG. 11 is displayed to the user on the information handling system 102 in step 380. The "Music Player Not Found" screen 292 shown in FIG. 11 may provide the user with troubleshooting tips.

After troubleshooting the problem with the music players 104, the user selects the "Next" button 296 on this screen 292 of FIG. 11, and the software again verifies whether the music player 104 is accessible over the network 106 in step 400. If the software finds at least one music player 104 on the network 106, the "Music Player Found" screen 300 shown in FIG. 12 is displayed to the user on the information handling system 102 in step 420. In the event that multiple music players 104 are connected to the network 106, this screen 300 confirms that the correct number of music players 104 was found on the network 106. If the correct number of music players 104 were found on the network 106, the user selects the "Next" button 306 with the "Yes" radio button 302 selected on this screen 300 of FIG. 12. In response, the "Music Player Set Up Successful" of FIG. 13, and then the "Standard Song Folders" screen of FIG. 3, are displayed to the user on the information handling system 102 in steps 470 and 480. Alternatively, step 470 may be omitted, and the "Standard Song Folders" screen of FIG. 3 may be displayed to the user in step 480.

If the software finds no music player 104 on the network 106 in step 400, the software then checks for the existence of a DHCP server on the network 106 in step 410. Additionally, if the incorrect number of music players 104 were found on the network 106 in step 420, the software then checks for the existence of a DHCP server on the network 106 in step 410.

If a DHCP server is detected in step 410, then the "Troubleshooting DHCP Server" screen 316 shown in FIG. 14 may be displayed to the user on the information handling system 102 in step 430. This screen 316 may provide instructions 318 to consult a user's manual for more information on troubleshooting the problem. If the user selects the "Finish" button 320, the user interface closes and the software terminates execution.

Alternatively, if a DHCP server is not detected, the "IP Address Required" screen 322 shown in FIG. 15 is displayed to the user on the information handling system 102 in step 440. The software prompts the user to set a recommended static IP address on the music player 104, and then provide the information handling system 102 with a compatible IP address. The software on the information handling system 102 may also provide (i.e., push) the recommended static IP address to the device 104, and the software or firmware on the device 104 may then set its IP address.

After the IP address is set on the music player 104, the software again verifies whether the music player 104 is accessible utilizing the network 106 in step 450. If the software finds at least one music player 104 on the network 106, the "Music Player Found" screen 330 shown in FIG. 16 is displayed to the user on the information handling system 102 in step 460. In the event that multiple music players 104 are connected to the network 106, this screen 330 confirms that the correct number of music players 104 were found on the network 106. If the correct number of music players 104 were found on the network 106, the user selects the "Next" button 336 with the "Yes" radio button 332 selected on this screen 330 of FIG. 16. In response, the "Music Player Set Up Successful" of FIG. 13, and then the "Standard Song Folders" screen of FIG. 3, are displayed to the user on the information handling system 102 in steps 470 and 480. Alternatively, step 470 may be omitted, and the "Standard Song Folders" screen of FIG. 3 may be displayed to the user in step 480.

If the software finds no music player 104 on the network 106 in step 450, the "IP Address Required" screen 322 shown in FIG. 15 is again displayed to the user on the information handling system 102 in step 440. Additionally, if the incorrect number of music players 104 were found on the network 106 in step 460, the "IP Address Required" screen 322 shown in FIG. 15 is again displayed to the user on the information handling system 102 in step 440.

If the software verifies that the music player 104 is seen on the network 106 and the correct number of music players 104 were found on the network 106 (in steps 390, 420, or 460), the "Music Player Setup Successful" screen 310 shown in FIG. 13 is displayed to the user on the information handling system 102 in step 470. The user then selects the "Next" button 312 on this screen 310, and the "Standard Song Folders" screen 230 shown in FIG. 3 is displayed to the user on the information handling system 102 in step 480. Alternatively, step 470 may be omitted, and the "Standard Song Folders" screen 230 of FIG. 3 may be displayed in step 480. After the network 106, the music player 104, and the information handling system 102 have been configured, the user must set up shared song folders on the information handling system 102 to be accessed by the music player 104. The software automatically searches the information handling system 102 for song folders. In one embodiment, the software may search for pre-designated (i.e., default) folders. The screen 230 shown in FIG. 3 then prompts the user to designate the found song folders as shared or not shared (i.e., file sharing is enabled or not enabled for these folders).

After the user designates certain song folders as shared or not shared, the user selects the "Next" button 236 in this screen 230. Then in step 490, the software confirms whether at least one music folder is designated as shared. If not, then the "No Shared Folder Found" screen 340 shown in FIG. 17 is displayed to the user on the information handling system 102 in step 500.

Otherwise, if at least one song folder is shared, the software inserts one or more sample music files in one of the shared song folders. The "Confirm Folders Displayed by Music Player" screen 238 shown in FIG. 4 is then displayed to the user on the information handling system 102 in step 510. This screen 238 confirms that song titles from the shared song folders on the information handling system 102 are displayed on the music player 104. If the song titles are not displayed, the user selects the "Next" button 244 with the "No" radio button 242 selected, and the "Troubleshooting Shared Folders" screen 346 shown in FIG. 18 is displayed to the user on the information handling system 102 in step 520. If the user selects the "Finish" button 348 on this screen 346 of FIG. 18, the user interface closes and the software terminates execution.

Otherwise, if the song titles are displayed, the user selects the "Next" button 244 with the "Yes" radio button 240 selected, and the "Confirm That Music Plays" screen 248 shown in FIG. 5 is displayed to the user on the information handling system 102 in step 530. This screen 248 allows the user to select and play a song from one of the shared song folders (such as the sample music file or another music file). If the song does not play, the user selects the "Next" button 254 with the "No" radio button 250 selected, and the "Troubleshooting Music Playback" screen 352 shown in FIG. 19 is displayed to the user on the information handling system 102 in step 540. If the user selects the "Finish" button 354, the user interface closes and the software terminates execution.

Otherwise, if the song plays, the user selects the "Next" button 254 with the "Yes" radio button selected 250, and the "Other Song Folders" screen 258 shown in FIG. 6 is displayed to the user on the information handling system 102 in step 550. This screen 258 checks whether the user has music files in other song folders on the information handling system 102. If the user has music files in other song folders, the user selects the "Next" button 264 with the "Yes" radio button 260 selected, and the "Special Setup Instructions" screen 358 shown in FIG. 20 is displayed to the user on the information handling system 102 in step 570. This screen 358 instructs the user either to move the music files into the song folders already designated as shared, or alternatively, to allow any song folder on the information handling system 102 designated as shared to be searched for music files. Otherwise, if the user does not have music files in other song folders, the user selects the "Next" button 264 with the "No" radio button selected 262, and the "Finished" screen 268 shown in FIG. 7 is displayed to the user on the information handling system 102 in step 560. When the user selects the "Finish" button 271 on this screen 268 of FIG. 7, the user interface closes and the software terminates execution.

In alternative embodiments, it should be appreciated that the software may provide a mechanism, which allows the user to omit steps 310-470 in the configuration process directed to detecting the music player 104 on the network 106, and instead, to proceed to steps 480-570 directed to searching for shared song folders containing music files on the information handling system 102. These music files may then be played on another information handling system connected to the network 106, rather than the music player 104.

Although the invention has been described with a certain degree of particularity, it should be recognized that elements thereof may be altered by persons skilled in the art without departing from the spirit and scope of the invention. In one embodiment, the method disclosed may be implemented as a set of instructions resident in memory of the information handling system 102. Until required by the information handling system 102, the set of instructions may be stored in another readable memory device, for example in a hard disk drive or in a removable memory such as an optical disk for utilization in a CD-ROM drive, a floppy disk for utilization in a floppy disk drive, a floppy/optical disk for utilization in a floppy/optical drive, or a personal computer memory card for utilization in a personal computer card slot. Further, the set of instructions may be stored in the memory of another information handling system and transmitted over a local area network or a wide area network, such as the Internet, when desired by the user. Additionally, the set of instructions may be transmitted over a network in the form of an applet that is interpreted or compiled after transmission to the information handling system 102 rather than prior to transmission. One skilled in the art would appreciate that the physical storage of the set of instructions or applet physically changes the medium upon which it is stored electrically, magnetically, chemically, physically, optically or holographically so that the medium carries computer readable information.

In exemplary embodiments, the method disclosed may be implemented as a set of instructions or software readable by an information handling system. Further, it is understood that the specific order or hierarchy of steps in the methods disclosed are examples of exemplary approaches. Based upon design preferences, it is understood that the specific order or hierarchy of steps in the method can be rearranged while remaining within the scope of the present invention. The accompanying method claims present elements of the various steps in a sample order, and are not meant to be limited to the specific order or hierarchy presented.

It is believed that the network configuration for connected devices of the present invention and many of its attendant advantages will be understood by the foregoing description. It is also believed that it will be apparent that various changes may be made in the form, construction and arrangement of the components thereof without departing from the scope and spirit of the invention or without sacrificing all of its material advantages, the form herein before described being merely an explanatory embodiment thereof. It is the intention of the following claims to encompass and include such changes.

## Claims

1. A music system, comprising:
an information handling system coupled to a local area network, the information handling system including a first set of instructions providing a graphical user interface; and
a music player coupled to and capable of accessing shared data on the information handling system through the local area network, the music player including a second set of non-interactive instructions;
wherein the first set of instructions is capable of sending network settings from
the information handling system to the music player, automatically detecting the music player by the information handling system through the network, automatically searching for music data on the information handling system, and sharing at least a portion of the music data on the information handling system with the music player through the local area network, and wherein the second set of instructions is capable of accepting network settings from the information handling system.

2. The music system as described in claim 1, wherein the network settings include an IP address for the music player.

3. The music system as described in claim 1, wherein the first set of instructions is further capable of creating a first user profile and a second user profile, enabling access by the first user profile to one or more music folders on the information handling system, and limiting access by the second user profile to at least one of the music folders on the information handling system accessible by the first user profile.

4. The music system as described in claim 1, wherein the music player is further capable of outputting the shared music data on the information handling system via an audio system coupled to the music player.

5. The music system as described in claim 4, wherein the music player is further capable of converting the shared music data from a first digital format suitable for output by the information handling system to a second analog format suitable for output by the audio system coupled to the music player.

6. A music system, comprising:
an information handling system communicatively coupled to a network, the information handling system having a program of instructions; and
a music player communicatively coupled to and capable of accessing shared data on the information handling system through the network, the music player suitable for processing music data in a digital format;
wherein the program of instructions is capable of configuring the music player for
accessing the information handling system through the network, automatically detecting the music player by the information handling system through the network, automatically searching for one or music folders on the information handling system, and specifying at least one of the music folders on the information handling system as shared data accessible by the music player through the network.

7. The music system as described in claim 6, wherein configuring the music player for accessing the information handling system through the network includes providing an IP address from the information handling system to the music player.

8. The music system as described in claim 6, wherein the program of instructions is further capable of creating a first user profile and a second user profile, enabling access by the first user profile to one or more music folders on the information handling system, and limiting access by the second user profile to at least one of the music folders on the information handling system accessible by the first user profile.

9. The music system as described in claim 6, wherein the music player is further capable of accessing a music file in the shared music folder on the information handling system through the local area network and outputting the music file on an audio system coupled to the music player.

10. The music system as described in claim 9, wherein the music player is further capable of converting the music file from a first digital format suitable for output by the information handling system to a second analog format suitable for output by the audio system coupled to the music player.

11. The music system as described in claim 6, wherein the program of instructions is executed from a storage medium by the information handling system.

12. In a music system comprising an information handling system communicatively coupled to a network and a music player communicatively coupled to and capable of accessing shared data on the information handling system through the network, a method for configuring the music system, comprising the steps of:
configuring the music player for accessing the information handling system through the network;
automatically detecting the music player by the information handling system through the network;
automatically searching for one or more music folders on the information handling system; and
specifying at least one of the music folders on the information handling system as shared data accessible by the music player through the network.

13. The method as described in claim 12, further comprising the step of configuring the information handling system for communications with the network.

14. The method as described in claim 12, further comprising the step of enabling file sharing on the information handling system.

15. The method as described in claim 12, wherein the configuring step includes providing an IP address from the information handling system to the music player.

16. The method as described in claim 12, further comprising the steps of:
creating a first user profile and a second user profile;
enabling access by the first user profile to one or more music folders on the information handling system; and
limiting access by the second user profile to at least one of the music folders on the information handling system accessible by the first user profile.

17. The method as described in claim 12, further comprising the steps of:
accessing a music file in the shared music folder on the information handling system by the music player through the network; and
outputting the music file on an audio system coupled to the music player.

18. The method as described in claim 12, wherein the method is accomplished utilizing instructions executed by the information handling system.

19. The method as described in claim 18, wherein the method is further accomplished utilizing instructions executed by the music player in conjunction with the instructions executed by the information handling system.

20. A storage medium readable by an information handling system and having instructions encoded thereon for causing the information handling system to perform, in a music system comprising the information handling system communicatively coupled to a network and a music player communicatively coupled to and capable of accessing shared data on the information handling system through the network, a method for configuring the music system, comprising the steps of:
configuring the music player for accessing the information handling system through the network;
automatically detecting the music player by the information handling system through the network;
automatically searching for one or more music folders on the information handling system; and
specifying at least one of the music folders on the information handling system as shared data accessible by the music player through the network.
